# EUROPEAN PATENT APPLICATION

(11) **EP 1 810 877 A1**
(43) Date of publication of application: **25.07.2007**
(21) Application number: 06380019.7
(22) Date of filing: 23.01.2006
(51) Int. Cl.: B60N 2/48

(54) **Retractable headrest for vehicle seats**

(71) Applicant: Viza Automocion, S.A.U., 36400 Porriño - Pontevedra (ES)
(72) Inventor: Alvarez Vazquez, German, 36210 Vigo - Pontevedra (ES); Canosa Carril, Mauricio, 36001 Pontevedra (ES); Regueiro Blanco, Agustin, 15008 A Courña (ES)
(74) Representative: Carvajal y Urquijo, Isabel

(57) **Abstract**

The present invention relates to a retractable headrest for a vehicle seat, comprising a frame (1) which includes two posts (2 and 3) housed with the ability to slide in respective sleeves (4 and 5) closed by means of caps (7 and 7'). At least one of the caps includes a transverse latch (12) for locking the corresponding post, which is connected to a cable (15) and by means of pulling on this cable the latch is moved to a post release position. The cable (15) can be actuated by means of a control located in the vehicle seat itself or in a location close to the driver's position.

## Description

The present invention relates to a retractable headrest for vehicle seats, particularly intended for being assembled in the rear seats of an automotive vehicle.

Headrests for vehicle seats generally consist in a metal frame and a soft cover. As an extension of the metal frame, projecting from the bottom of the soft cover there are two parallel posts that are introduced with sliding ability in two sleeves assembled in the backrest, from the upper edge or surface. These sleeves can be closed at the upper portion by caps having a passage sized so as to allow the passage of the posts. At least one of the caps has a transverse latch assembled thereon that is able to act on a notch or recess of the post in order to lock it in the active headrest use position. The latch can be manually retracted with respect to the locked position to release the post and allow the headrest to lower to its support on the backrest as well as to completely extract said headrest. The latch is driven towards the locked position by means of a spring.

However, when the rear vehicle seats are not occupied, it may be desirable to remove the corresponding headrests in order to eliminate the obstacle they can be for the driver's rear vision.

In order to achieve this objective retractable headrests are already known which, when their use is not necessary as the rear seats are unoccupied, can be retracted or hidden such that they do not hinder the driver's rear vision. This retracting can be achieved by introducing the headrest into the backrest or configuring it such that in its lower limit position it is coupled on the front or rear surface of the backrest.

Whatever the constitution of the headrest, both the height section thereof and its retracted position location are operations that are carried out manually. To that end the latch is manually actuated, pulling on it against the action of the spring driving it to the locked position, until extracting it from this position and releasing the corresponding post. Then, by pushing the headrest downwards, it can be moved to its lower position or to its retracted position. To recover the active operation function, and even to completely remove the headrest, it is necessary to act on it in the opposite direction.

These operations may be tedious and cumbersome, so even though headrests have the discussed retracting ability, it is not used.

The present invention has as an object eliminating the indicated drawbacks by means of a headrest formed such that it can go from the active or use position thereof to the retracted position in a completely automatic manner, without needing to manually act on the headrest.

Another object of the invention is that the automatic headrest retracting operation can be carried out from a distance, for example from the driver's seat.

Recovery of the headrest from the lower or retracted position to the active use position, and even the extraction thereof, is carried out manually.

Therefore, when the rear seats are unoccupied and their headrests may hinder the driver's rear vision, the driver can quickly and comfortably place said headrests in the retracted position. When the rear seats are later occupied, the occupants can move the headrests to their active use position.

The objectives and advantages set forth are obtained with the headrest of the invention, which is of the type initially set forth and is characterised in that the transverse latch which locks movement of the post or posts of the frame of the headrest is connected to a cable, and by means of pulling on this cable causes said latch to move out of the post lock position, such that it is free to move. Furthermore the sleeve carrying said transverse latch houses an inner head that can move throughout the entire sleeve and has releasable locking means for locking on the end of the corresponding post. Assembled between this head and the cap closing the sleeve there is a compression spring constantly driving the head downwards. The cap closing the sleeve has an inner skirt that will be useful as an element limiting the downward movement of the head and also as an element releasing the fixing means fixing said head to the end of the post.

With the discussed constitution, when the headrest is in the operational use position the head connected to the end of the corresponding post is in an upper position, compressing the spring assembled between said head and the cap closing the sleeve. If the cable connected to the latch is pulled on in this situation, the latch is moved out of the post lock position, so the spring assembled between head and cap will drive the head downwards until reaching the bottom of the sleeve, in which situation the headrest will be in a lower retracted limit position.

In order to locate the headrest again in the operating position it is enough to pull it upwards until the transverse latch acts on a locking recess of the post.

Finally, in order to achieve extraction of the headrest it will be necessary to release the fixing means for fixing the head on the end of the corresponding post.

The discussed fixing means consist in a peripheral channel or groove that the post has close to its lower end and of two considerably parallel retractable pins assembled in respective oblique grooves made on a cylindrical wall projecting from the upper portion of said head and defining a passage for the post. These grooves are through grooves when they traverse said wall, are located in diametrically opposite positions and diverge downwardly. The pins can move over the grooves between an upper position, defined by the upper end of the grooves, in which the pins project from the inner surface of the wall and partially enter the peripheral channel of the end of the head, blocking the relative movement between both components, and a lower position, in which they do not project from the inner surface of the wall and therefore cannot enter the peripheral channel of the post, the latter being released for its extraction. Arranged around the wall projecting from the head there is a plate on the bottom of which the end portions of the pins rest. Arranged around the same wall there is a compression spring assembled between the plate and the head, which spring constantly drives the plate upwards, for the purpose of maintaining the pins in the upper limit position.

As previously indicated, the cap internally has a skirt which is useful as an element limiting the upward movement of the inner head and as an element releasing the fixing means for fixing said head to the end of said post. To that end this skirt has a diameter comprised between the maximum and minimum diameters of the skirt of the plate and rests, through its free edge, on said bottom when the head reaches its upper use position, acting as a plate retaining element. With this constitution, if the frame is pulled and moved upwardly, the plate can not move upwardly as it is retained by the inner skirt of the cap, the pins then loosing support and dropping due to their own weight onto the bottom of the plate, to the previously mentioned lower post release position, in which situation the headrest can be freely extracted and removed from the backrest.

The cable responsible for pulling on the transverse post locking latch could be actuated by means of a handle that can be located on the backrest itself, at an accessible location close to the driver's position, etc.

The constitution, operation and advantages of the headrest of the invention will be better understood with the following description, made in reference to the attached drawings which show a non-limiting embodiment.

In the drawings:
Figure 1 shows a perspective view of the frame of a headrest constituted according to the invention, assembled on the frame of a vehicle backrest,
Figure 2 shows an exploded perspective view of the sleeve including the transverse latch for the frame of the headrest.

Figure 3 shows a cross-section view of the sleeves in which the posts of the frame of the headrest are assembled, with said headrest in the operational use position.

Figure 4 shows a view similar to Figure 3, showing the latch in the unlocked position.

Figure 5 shows a view similar to Figure 4, in which the frame is shown in the retracted headrest position.

Figure 6 shows a view similar to Figure 1, with the frame slightly moved upwardly for its disassembly.

Figure 7 shows a view similar to Figure 6, showing the final position of the components housed in the sleeve once the frame is extracted.

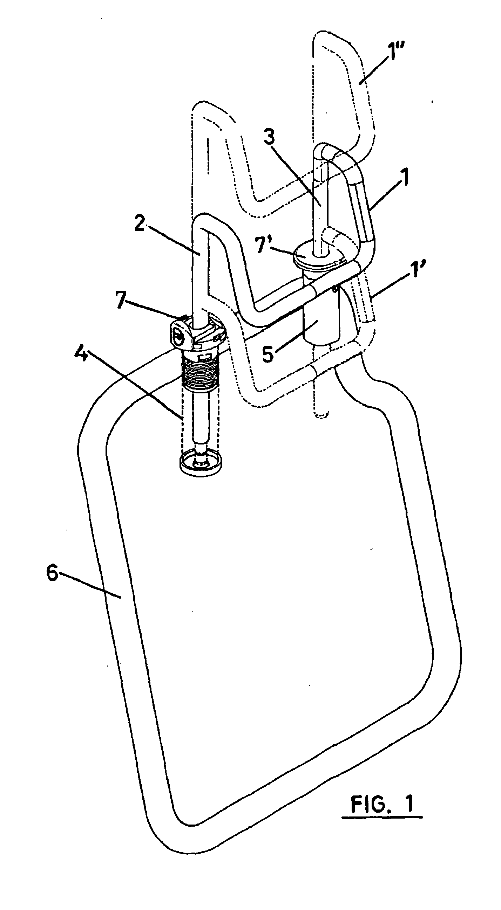

As previously indicated, the headrest of the invention is of the type comprising a frame and a soft cover. Figure 1 shows only the frame 1 of the headrest, which frame includes two posts with reference numbers 2 and 3 projecting from the lower portion of the soft cover and which are intended for being introduced in two sleeves 4 and 5 that are introduced in the backrest, from the upper edge or surface, and fixed to the frame 6 of said backrest.

The sleeves 4 and 5 are closed by means of caps 7 and 7' having corresponding passages for the posts 2 and 3. Sleeve 5 is useful simply as a guiding element for post 3, whereas sleeve 4 is useful as a guiding element of post 2, and it further includes means for locking the corresponding post in certain positions.

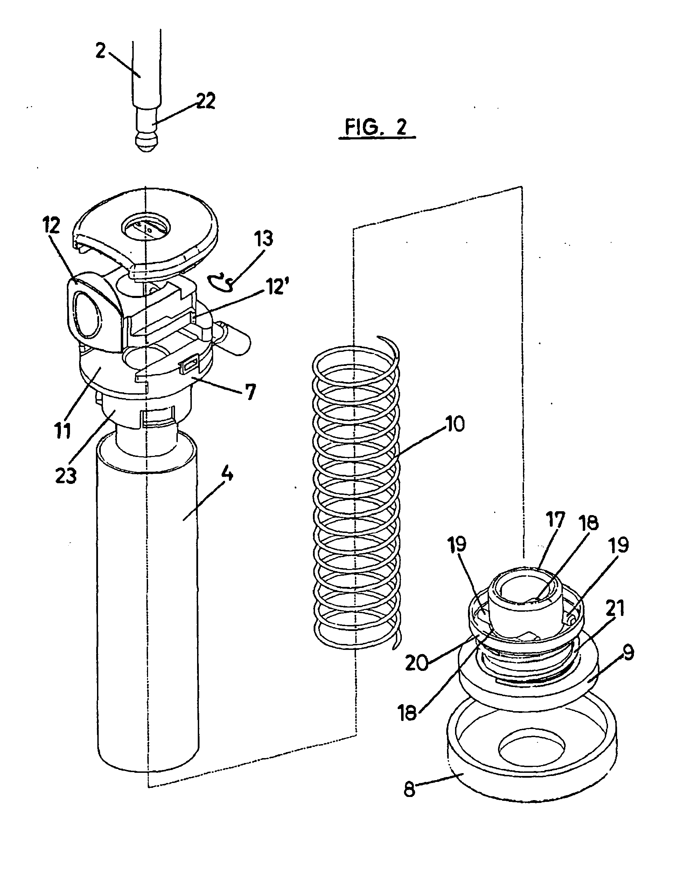

Figure 2 shows an exploded view of sleeve 4, which is closed at the lower portion by a cap 8 and at the upper portion by cap 7. Housed inside sleeve 4 there is also a head 9, which can move throughout sleeve 4, and a compression spring 10 assembled between said head 9 and cap 7.

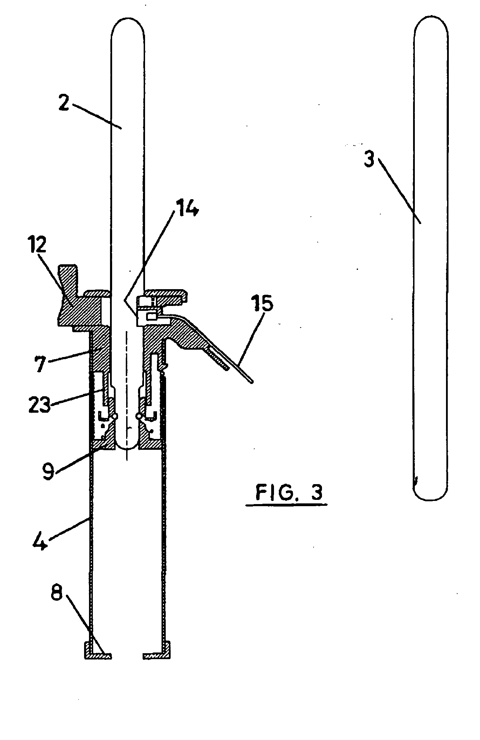

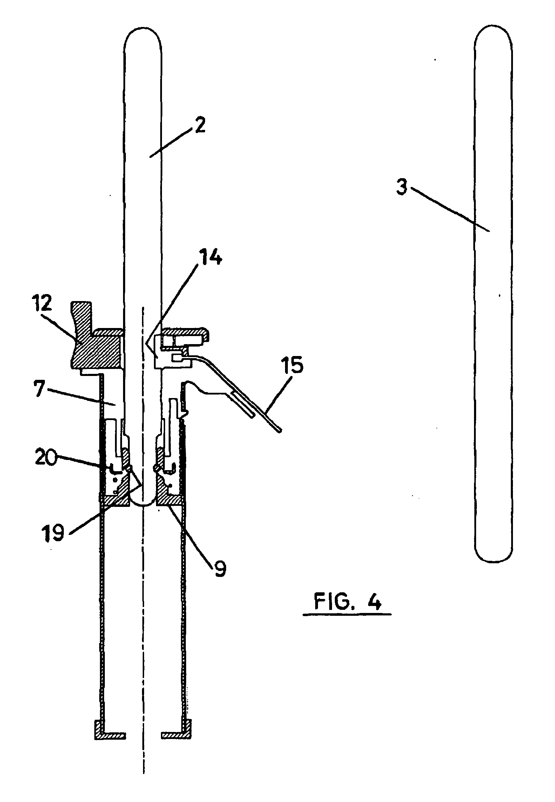

As can be seen in Figure 2, cap 7 forms at the upper portion a slot or guide 11 in which there is assembled a transverse latch 12 that can move between a maximum extraction position, shown in Figure 3, and a maximum retraction position, shown in Figure 4, being constantly driven to the maximum extraction position by means of a spring 13. The latch 12 has side claws 14 acting as stops for limiting the maximum extraction position of Figure 3

The transverse latch 12 can be coupled in its maximum extraction position shown in Figure 3 in a transverse notch or recess 14 of the post 2 of the frame, as can be seen in Figure 3, to lock said frame in the operational use position, referenced with number 1 in Figure 1. The spring 10 is compressed in this operational headrest use position, as can be seen in Figure 3.

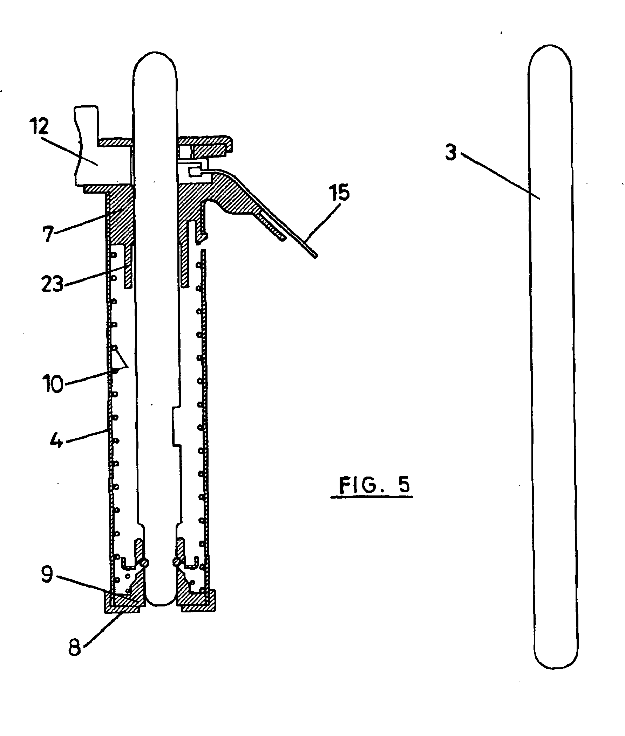

The transverse latch 12 is connected to a cable 15, and by means of pulling on it said latch is moved to the maximum retraction position shown in Figure 4, in which said latch does not enter the transverse notch or recesses 14 of the post 12, which is thus released, being automatically moved downwards due to the action of the spring 10, until occupying a lower retracted limit position shown in Figure 5 and referenced with number 1' in Figure 1. In this movement, the head 9 is moved until resting against the lower closure cap 8.

Operation of the cable 15 can be done by any system, by means of a control located on the backrest itself, or in a location close to the driver's position so that it can be accessed therefrom.

As can be seen in Figure 2, the head 9 has an upper cylindrical wall 17 provided with two oblique through grooves 18, located in diametrically opposite positions and downwardly divergent from one another. Assembled in these grooves are two pins 19 resting on the bottom of a plate 20 assembled around the wall 17. Assembled between the plate 20 and the head 9 there is a compression spring 21 constantly driving the plate upwards in order to keep the pins 19 against the upper end of the grooves 18. In this position the pins project from the inner surface of wall 17 and enter a peripheral channel or groove 22 the post 2 has in its lower end portion, these pins thus acting as a fixing means for fixing the head 9 on the lower end of the post 2.

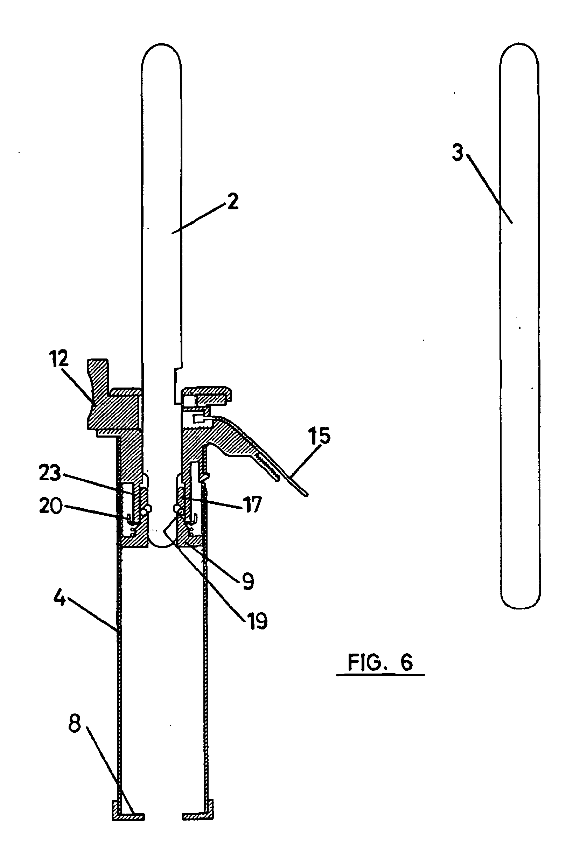

If the plate 20 moves downwards the pins 19 will drop down due to their own weight along the grooves 18, being progressively separated until they do not project from the inner surface of the wall 17, and therefore they do not enter the peripheral channel or groove 22 of the post 2, as will be explained below in reference to Figure 6.

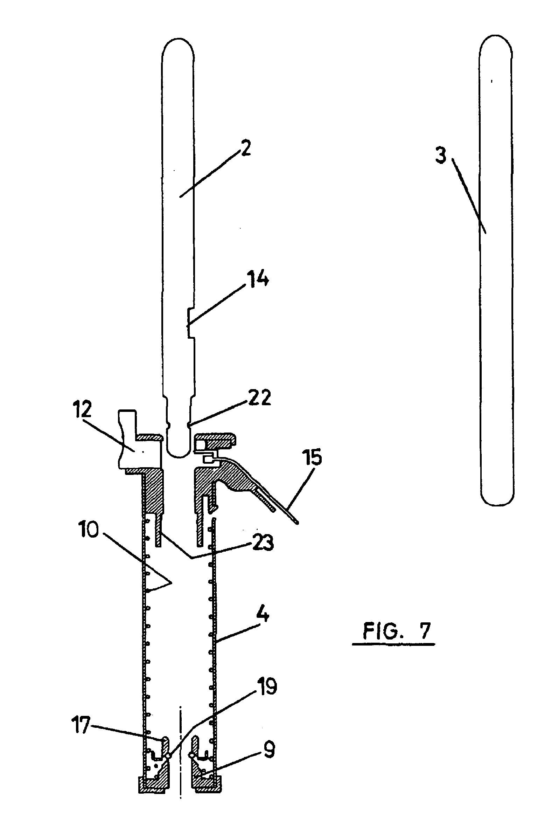

The head 7 closing the upper portion of the sleeve 4 has an inner skirt 23 of diameter comprised between the outer and inner diameters of the plate 20. If after the operational headrest use position, shown in Figure 3, said headrest and its frame are pulled upwardly, post 2 will drag the head 9 to the position of Figure 6, in which the skirt 23 of cap 7 will rest on its free edge against the bottom of the plate 20, acting as a retaining member to limit the upward movement of said plate. If the frame is pulled further, the head 9 will continue to move upwardly, compressing the spring 21 assembled between said head and plate. The pins 19 will be released at the same time and due to their own weight will drop down until they do not project from the inner surface of the wall 17 of the head 9, and therefore they do not enter the peripheral channel or groove 22 of post 2, said post thus being released so as to allow its complete extraction, as shown in Figure 7. At this time the spring 10 will again drive the head 9 to the lower limit position, the plate 20 also recovering its upper position due to the effect of the spring 21. In this position, if post 2 is again introduced through cap 11, with the latch 12 in the retracted position, it will enter until the lower end of said post, rounded or cone-shaped, enters the wall 17 of the head 9, the pins 19 retracting, until the height thereof reaches the peripheral channel or groove 22, at which time said pins will occupy their upper limit position, entering said groove and the post 2 thus being retained in the position of Figure 5. In order to locate the headrest in the operational use position it will be sufficient to pull it upwardly, to move the frame from position 5 to the position of Figure 3, in which the latch 12 locks the post and with it the headrest position.

## Claims

1. A retractable headrest for vehicle seats, comprising a frame (1) and a soft cover, which frame has two parallel posts (2,3) projecting from the lower portion of the cover and housed with the ability to slide in respective sleeves (4,5) assembled on the backrest, which sleeves are closed at the upper portion by means of caps (7,7') provided with a central passage for the posts, at least one of the caps including a transverse latch (12) for locking the corresponding post in a headrest use position, said latch (12) being driven to the locked position by means of a spring (13), **characterised in that** said transverse latch (12) is connected to a cable (15), and by means of pulling on this cable (15) the latch (12) is moved, against the action of the spring (13), to the post lock position; and **in that** the sleeve (4) carrying the cap (7) including the transverse latch (12) houses an inner head (9) and a compression spring (10) assembled between said head (9) and the cap (7) around the post (2); which head (9) can move throughout the sleeve (4), between a lower retracted position and an upper use position in which the spring (10) is compressed, and has releasable fixing means for fixing it on the end of the corresponding post (2); and which cap (7) has an inner skirt (23) which is useful as an element limiting the upward movement of the inner head (9) and as an element releasing the fixing means for fixing said head (9) to the end of the post (2).

2. A headrest according to claim 1, **characterised in that** the fixing means for fixing the head (9) on the end of the corresponding post (2) consist in a peripheral channel (22) that said post (2) has, close to its end, and of two considerably parallel retractable pins (19) assembled between respective oblique grooves (18) made on a cylindrical wall (17) projecting from the upper portion of said head (9), which grooves (18) are through grooves, are located in diametrically opposite positions and diverge downwardly; the pins (19) being able to move over the grooves (18) between an upper position, in which they project from the inner surface of the wall (17) and partially enter the peripheral channel (22) of the end of the head (9), and a lower position in which they do not project from the inner surface of the wall (17) and release the extraction post; and **in that** assembled around said wall (17) there is a plate (20), on the bottom of which the end portions of the pins (19) rest, and a compression spring (21) compressed between the plate (20) and the head (9) which constantly drives the plate upwards.

3. A headrest according to claims 1 and 2, **characterised in that** the inner skirt (23) of the cap (7) has a diameter comprised between the maximum and minimum diameters of the bottom of the plate (20) and rests through its free end on said bottom when the plate (20) reaches its upper position inside the sleeve (4), acting as a plate retaining member, when pulling on the frame (1) and moving it downwardly in order to cause the pins (19) to drop, due to their own weight, onto the bottom of the plate (20), to the lower post (2) release position.
